# EUROPEAN PATENT APPLICATION

(11) **EP 3 352 528 A1**
(43) Date of publication of application: **25.07.2018**
(21) Application number: 16845531.9
(22) Date of filing: 18.05.2016
(51) Int. Cl.: H04W 88/04, H04L 29/12

(54) **REMOTE CONTROL METHOD AND APPARATUS AND MOBILE TERMINAL**

(30) Priority: 16.09.2015 CN 201510591740
(71) Applicant: ZTE Corporation, Shenzhen, Guangdong 518057 (CN)
(72) Inventor: LIU, Bo, Shenzhen Guangdong 518057 (CN); LI, Bin, Shenzhen Guangdong 518057 (CN); ZHANG, Hui, Shenzhen Guangdong 518057 (CN)
(74) Representative: Regimbeau
(86) International application number: PCT/CN2016/082517
(87) International publication number: WO 2017/045417

(57) **Abstract**

A remote control method includes: sharing a first user interface of a first mobile terminal to a second mobile terminal by the first mobile terminal to present a second user interface on the second mobile terminal, where the second user interface includes a content of the first user interface; receiving an operation instruction of the second mobile terminal by the first mobile terminal, where the operation instruction is generated according to an operation on the second user interface and is configured to instruct the first mobile terminal to execute a wireless communication function; and executing, by the first mobile terminal, the wireless communication function instructed by the operation instruction.

## Description

### TECHNICAL FIELD

The present disclosure relates to, but is not limited to, the field of communications, and particularly to a remote control method and apparatus and a mobile terminal.

### BACKGROUND

At present, in order to ensure information security, a mobile terminal (that is, user equipment) on the market generally employs a dual-system technology, a software encryption technology and other related arts to ensure the security of data in the mobile terminal of a user. However, such the security is poor.

In view of the problem of low security of data in the mobile terminal in the related arts, no effective solution has been proposed so far.

### SUMMARY

The following is an overview of a subject matter described in detail in this disclosure. This summary is not intended to limit a protective scope of claims.

This disclosure provides a remote control method and apparatus as well as a mobile terminal to at least solve a problem of low security of a mobile terminal in the related art.

An embodiment of the present disclosure provides a remote control method. The method includes: sharing a first user interface of a first mobile terminal to a second mobile terminal by the first mobile terminal to present a second user interface on the second mobile terminal, where the second user interface includes a content of the first user interface; receiving an operation instruction of the second mobile terminal by the first mobile terminal, where the operation instruction is generated according to an operation on the second user interface and the operation instruction is configured to instruct the first mobile terminal to execute a wireless communication function; and executing, by the first mobile terminal, the wireless communication function instructed by the operation instruction.

Alternatively, the wireless communication function includes at least one of the following: a text message function, a multimedia message function and a call function.

Alternatively, the sharing a first user interface of a first mobile terminal to a second mobile terminal by the first mobile terminal includes: monitoring an event by the first mobile terminal, where the event includes at least one of the following: receiving a communication request of the second mobile terminal, receiving a text message or multimedia message, and receiving a call incoming request; and upon monitoring the event, pushing the first user interface to the second mobile terminal by the first mobile terminal to present the second user interface on the second mobile terminal.

Alternatively, the wireless communication function includes the text message function or the multimedia message function. The step of executing, by the first mobile terminal, the wireless communication function instructed by the operation instruction includes: obtaining, by the first mobile terminal, an information content and a destination address carried in the operation instruction; generating a text message or a multimedia message by the first mobile terminal according to the information content and the destination address; and transmitting the generated text message or multimedia message by the first mobile terminal.

Alternatively, the wireless communication function includes a calling function. The step of executing, by the mobile terminal, the wireless communication function instructed by the operation instruction includes: obtaining a called number of a called party carried in the operation instruction by the first mobile terminal; dialing the called number and establishing a call with the called party by the first mobile terminal. The first mobile terminal receives a call audio or call video acquired by the second mobile terminal, and the first mobile terminal transmits a call audio or call video received from the called party to the second mobile terminal so as to implement an audio call or video call between the second mobile terminal and the called party.

Alternatively, the wireless communication function includes a called function. The step of executing, by the first mobile terminal, the wireless communication function instructed by the operation instruction includes: accepting or rejecting a call request from a calling party by the first mobile terminal according to the operation instruction. If the first mobile terminal accepts the call request from the calling party, the first mobile terminal receives a call audio or call video acquired by the second mobile terminal, and the first mobile terminal transmits a call audio or call video received from the calling party to the second mobile terminal so as to implement an audio call or video call between the second mobile terminal and the calling party.

Alternatively, the first mobile terminal and the second mobile terminal communicate with each other over a wireless interface.

Alternatively, before the first mobile terminal shares the first user interface to the second mobile terminal, the method further includes: performing authentication and pairing on the first mobile terminal and the second mobile terminal, and establishing a wireless connection between the first mobile terminal and the second mobile terminal through the wireless interface.

Alternatively, after performing authentication and pairing on the first mobile terminal and the second mobile terminal, the method further includes: receiving an unpairing request by the first mobile terminal; and deleting an authentication-pairing relationship between the first mobile terminal and the second mobile terminal by the first mobile terminal according to the unpairing request.

Alternatively, after the first mobile terminal shares the first user interface to the second mobile terminal, the method further includes: receiving predetermined data of the second mobile terminal through the wireless interface, where the predetermined data includes at least one of the following: text data, picture data, audio data, video data, and a system configuration file of the second mobile terminal; and storing the predetermined data in a non-volatile memory of the first mobile terminal by the first mobile terminal.

Alternatively, the wireless interface includes one of the following: a near field communication module, a Bluetooth module, a WIFI module and a mobile communication module.

An embodiment of the present disclosure further provides a remote control method. The method includes: presenting a second user interface by a second mobile terminal, where the second user interface includes a first user interface, and the first user interface is shared by a first mobile terminal; generating an operation instruction by the second mobile terminal according to an operation of a user on the second user interface, where the operation instruction is used to instruct the first mobile terminal to execute a wireless communication function; and transmitting the operation instruction to the first mobile terminal by the second mobile terminal for the first mobile terminal to execute the wireless communication function instructed by the operation instruction.

Alternatively, the wireless communication function includes at least one of the following: a text message function, a multimedia message function and a call function.

An embodiment of the present disclosure further provides a computer-readable storage medium storing a computer-executable instruction, which, when being executed, implements the above remote control method.

An embodiment of the present disclosure further provides a remote control apparatus applied to a first mobile terminal. The remote control apparatus includes a sharing module, which is configured to share a first user interface of the first mobile terminal to a second mobile terminal to present a second user interface on the second mobile terminal, where the second user interface includes a content of the first user interface; a receiving module, which is configured to receive an operation instruction of the second mobile terminal, where the second user interface is generated according to an operation on the second user interface and used to instruct the first mobile terminal to execute a wireless communication function; and an execution module, which is configured to execute the wireless communication function instructed by the operation instruction.

An embodiment of the present disclosure further provides a remote control apparatus applied to a second mobile terminal. The remote control apparatus includes a presentation module, which is configured to present a second user interface, where the second user interface includes a first user interface, and the first user interface is shared by a first mobile terminal; a generation module, which is configured to generate an operation instruction according to an operation of a user on the second user interface, where the operation instruction is used to instruct the first mobile terminal to execute a wireless communication function; and a transmission module, which is configured to transmit the operation instruction to the first mobile terminal for the first mobile terminal to execute the wireless communication function instructed by the operation instruction.

An embodiment of the present disclosure further provides a mobile terminal, including the above remote control apparatus applied to the first mobile terminal.

An embodiment of the present disclosure further provides a mobile terminal, including the above remote control apparatus applied to the second mobile terminal.

A first user interface of a first mobile terminal is shared to a second mobile terminal by the first mobile terminal to present a second user interface on the second mobile terminal, where the second user interface includes a content of the first user interface; the first mobile terminal receives an operation instruction of the second mobile terminal, where the operation instruction is generated according to an operation on the second user interface, the operation instruction is used to instruct the first mobile terminal to execute a wireless communication function; and the first mobile terminal executes the wireless communication function instructed by the operation instruction. Accordingly, the embodiments of the present disclosure solve the problem of low security of data in the mobile terminal and improve the security of the data in the mobile terminal.

Other aspects will become apparent upon reading and understanding accompanying drawings and detailed description.

### BRIEF DESCRIPTION OF DRAWINGS

FIG. 1 is a flowchart of a remote control method according to an embodiment of the present disclosure;
FIG. 2 is a flowchart of another remote control method according to an embodiment of the present disclosure;
FIG. 3 is a block diagram showing a structure of a remote control apparatus according to an embodiment of the present disclosure;
FIG. 4 is a block diagram showing a structure of another remote control apparatus according to an embodiment of the present disclosure;
FIG. 5 is a flowchart of initializations of a secure mobile and a common mobile according to an alternative embodiment of the present disclosure;
FIG. 6 is a flowchart of an interaction between a controlling terminal and a controlled terminal according to an alternative embodiment of the present disclosure; and
FIG. 7 is a flowchart of an interaction between a controlling terminal and a controlled terminal in a MiFi device according to an alternative embodiment of the present disclosure.

### DETAILED DESCRIPTION

Embodiments of the present disclosure will be described below with reference to accompanying drawings. It is to be noted that, in the case of no conflict, the embodiments in the present application and various manners in the embodiments may be combined with each other.

It is to be noted that, terms "first", "second" and the like in the present disclosure are used to distinguish similar objects, and are not necessarily used to describe a specific sequence or an order.

A research shows that: if a mobile terminal of a user is lost, it means that important information in the mobile terminal is lost. Even if local data is encrypted, it is not possible to guarantee that the mobile terminal may not be cracked. In addition, if there is no backup for some important data such as photos, phone books, and the like before, these important data will also be lost together with the mobile terminal. For payment of the mobile terminal, there is also a risk that a Trojan program steals payment accounts and passwords by intercepting transmitted data. In addition, some users may also obtain the highest authority or perform jailbreak operation on their own mobile terminal, for example, in order to use game plug-in, and thus the risk of information security is increased.

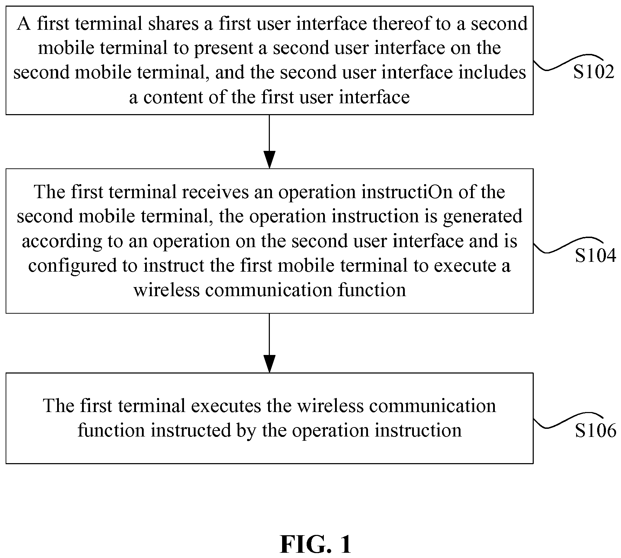

This embodiment provides a remote control method. FIG. 1 is a flowchart of the remote control method according to an embodiment of the present disclosure. As shown in FIG. 1, the method includes the following steps.

In step S102, a first mobile terminal shares a first user interface of the first mobile terminal to a second mobile terminal to present a second user interface on the second mobile terminal. The second user interface includes a content of the first user interface.

In step S104, the first mobile terminal receives an operation instruction of the second mobile terminal. The operation instruction is generated according to an operation on the second user interface, and the operation instruction is used to instruct the first mobile terminal to execute a wireless communication function.

In step S106, the first mobile terminal executes the wireless communication function instructed by the operation instruction.

By means of the above steps, the user performs a remote control operation on the first mobile terminal through the shared user interface on the second mobile terminal, and the second mobile terminal may not store any user data of the first mobile terminal. Even if the second mobile terminal has a security risk, for example, there is a Trojan virus in the second mobile terminal or the second mobile terminal is lost or stolen, since any user data such as text messages, accounts, and call records of the first mobile terminal is not actually stored in the second mobile terminal, the security of the data in the first mobile terminal is guaranteed. As such, by means of the above steps, the problem of low security of the data in the mobile terminal is solved, and the security of the data in the mobile terminal is improved.

In addition, in order to ensure that the first mobile terminal is at a higher security level, the authority of an operating system of the first mobile terminal may also be strictly limited so as to prevent an application program installed on the first mobile terminal from obtaining a higher authority and even the highest authority of the system. For another example, the application program that is probably installed on the first mobile terminal may also be limited. For example, the first mobile terminal may be configured such that only the application program for the wireless communication function may be installed. These restrictions aim to avoid data leakage on the first mobile terminal due to intrusion by malicious application programs or Trojan programs. However, since user-sensitive data may not be stored on the second mobile terminal, there may be a more relaxed permission limitation on the second mobile terminal, and even no permission setting may be set.

When the user interface is shared, the first mobile terminal may share all user interfaces of the first mobile terminal to the second mobile terminal, or the first mobile terminal may only share a part of the user interfaces to the second mobile terminal for presenting a part of the user interfaces of the first mobile terminal on the second mobile terminal.

In the embodiment of the present disclosure, the second mobile terminal may be a mobile phone or a portable device with a part of functions of the mobile phone, for example, a tablet. The second mobile terminal may have a display screen, a user input module (which may include, but is not limited to, at least one of a text input module, a gesture input module and an audio input module), an audio output module, and a wireless interface. The second mobile terminal may not have a mobile communication function to access a mobile communication network, and the mobile communication function to access the mobile communication network may be performed by the first mobile terminal. Correspondingly, the first mobile terminal may not have any display screen, any audio input module, any text input module, any gesture input module, any audio output module and the like.

It may be seen from the above description that the first mobile terminal performs a communication function excluding a human-machine interaction function, while the second mobile terminal assumes the human-machine interaction function of the first mobile terminal. The data interaction between the first mobile terminal and the second mobile terminal may be implemented via a wired or wireless interface. Meanwhile, a volume and a shape of the first mobile terminal may be arbitrarily designed because the user does not actually operate the first mobile terminal any more, and components such as the display screen used for the human-machine interaction function may be removed from the first mobile terminal. By designing the first mobile terminal, for example, by masquerading the first mobile terminal as a key pendant, a desktop ornament, and the like, the first mobile terminal has not only a beautiful appearance but also an improved security, and is not easily stolen or lost.

Alternatively, the above wireless communication functions may be system default settings or preset by the user. By setting these wireless communication functions in advance, only specific applications or progresses are permitted on the first mobile terminal, which further guarantees the security of the first mobile terminal. For example, the wireless communication function may include, but are not limited to, at least one of the following: a text message function, a multimedia message function and a call function.

Alternatively, in step S102, the first mobile terminal may monitor an event. The event includes at least one of the following: receiving a communication request of the second mobile terminal, receiving a text message or multimedia message, and receiving a call incoming request. Upon the event being monitored, the first mobile terminal may push the first user interface to the second mobile terminal to present the second user interface on the second mobile terminal. By means of the above event triggering manner, the first mobile terminal does not need to be always connected to the second mobile terminal, so long as the first mobile terminal is maintained in the monitoring state. Once the event arrives, the information interaction between the first mobile terminal and the second mobile terminal may be triggered. In addition, an alternative scheme is that the first mobile terminal actively pushes the first user interface to the second mobile terminal. Certainly, it may be also contemplated that the second mobile terminal requests sharing of the first user interface and the first mobile terminal pushes the first user interface in response to the request.

By taking a case where the communication function includes the text message function or multimedia message function as an example, in step S106, the first mobile terminal may obtain an information content and a destination address carried in the operation instruction. The first mobile terminal may generate a text message or multimedia message according to the information content and the destination address; and the first mobile terminal may transmit the generated text message or multimedia message.

When the first mobile terminal receives the text message or multimedia message, the first mobile terminal may directly trigger sharing of the first user interface to the second mobile terminal, and pop up a message related to the text message or multimedia message on the shared user interface for the user to read. It is to be noted that the first mobile terminal may not forward the text message or multimedia message to the second mobile terminal in a text message format or multimedia message format but only display the text message or multimedia message on the user interface shared by the second mobile terminal, thereby avoiding a risk that the text message or multimedia message is leaked if being stored in the second mobile terminal.

By taking a case where the communication function includes a calling function as an example, in step S106, the first mobile terminal may obtain a called number of a called party carried in the operation instruction. The first mobile terminal may dial a call out according to the called number, and establishes a call with the called party. The first mobile terminal may receive a call audio or call video acquired by the second mobile terminal, and the first mobile terminal may transmit a call audio or call video received from the called party to the second mobile terminal, such that an audio call or video call is implemented between the second mobile terminal and the called party.

By taking a case where the communication function includes a called function as an example, in step S106, the first mobile terminal may accept or reject a call request of a calling party according to the operation instruction. When the first mobile terminal accepts the call request of the calling party, the first mobile terminal may receive a call audio or call video acquired by the second mobile terminal and the first mobile terminal may transmit a call audio or call video received from the calling party to the second mobile terminal, so as to implement an audio call or video call between the second mobile terminal and the calling party.

Alternatively, the first mobile terminal and the second mobile terminal may communicate with each other over a wireless interface.

In the above manner, it may be seen that the communication function is implemented by the first mobile terminal, while the human-machine interaction function is performed on the second mobile terminal.

Alternatively, before the first mobile terminal shares the user interface to the second mobile terminal, authentication and pairing are performed on the first mobile terminal and the second mobile terminal, and a wireless connection is established between the first mobile terminal and the second mobile terminal through a wireless interface.

In general, after authentication and pairing are performed on the first mobile terminal and the second mobile terminal, the second mobile terminal may have a permission to control the first mobile terminal. Then, in order to cancel the permission of the second mobile terminal to control the first mobile terminal if the second mobile terminal is lost, an unpairing request may be transmitted to the first mobile terminal, and the first mobile terminal may receive the unpairing request and delete the authentication and pairing relationship between the first mobile terminal and the second mobile terminal according to the unpairing request.

A manner of transmitting the unpairing request may be as follows: transmitting a predetermined control instruction to the first mobile terminal through another mobile terminal; or triggering a reset button on the first mobile terminal.

Alternatively, predetermined data of the second mobile terminal may be stored in the first mobile terminal in order to protect photos taken on the second mobile terminal and files edited on the second mobile terminal. For example, the first mobile terminal may receive the predetermined data of the second mobile terminal through the wireless interface. The predetermined data may include at least one of text data, picture data, audio data, video data, and a system configuration file of the second mobile terminal and the like. The first mobile terminal may store the predetermined data in a non-volatile memory of the first mobile terminal. The predetermined data in the second mobile terminal may be deleted, or a part of or all of the data may be reserved according to a security requirement.

Alternatively, the above wireless interface may include one of the following: a near field communication (NFC) module, a Bluetooth module, a wireless-fidelity (WIFI) module, and a mobile communication module. For the near field communication module, the Bluetooth module and the WIFI module, since their wireless communication distances are limited, it is necessary to ensure that a distance between the first mobile terminal and the second mobile terminal may not exceed effective distances of their wireless communications. For the first mobile terminal and the second mobile terminal whose wireless interfaces include the mobile communication modules, the first mobile terminal and the second mobile terminal just need to be in a coverage of the same mobile communication network (or the mobile communication network supporting an interaction between the first mobile terminal and the second mobile terminal). For example, the user may place the second mobile terminal in a safe place (for example, in an office, at home) instead of carrying it with him or her. In addition, since a call location of the first mobile terminal may be maintained in the office or at home, the user is prevented from being located by the mobile communication network, so that the privacy of whereabouts of the user is ensured. In addition, there may be multiple wireless interfaces on the first mobile terminal and the second mobile terminal at the same time, and in a case where multiple networks (for example, a Bluetooth network, a WIFI network, and the mobile communication network) are available, the first mobile terminal and the second mobile terminal may select the network for communication according to a preset network selection strategy.

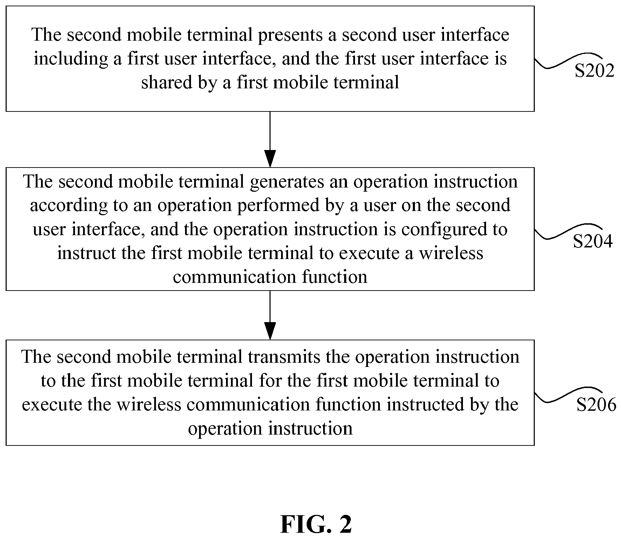

This embodiment further provides another remote control method. FIG. 2 is a flowchart of the remote control method according to an embodiment of the present invention. As shown in FIG. 2, the method includes the following steps.

In step S202, a second mobile terminal presents a second user interface. The second user interface includes a first user interface, and the first user interface is shared by a first mobile terminal.

In step S204, the second mobile terminal generates an operation instruction according to an operation performed by a user on the second user interface. The operation instruction is configured to instruct the first mobile terminal to execute a wireless communication function.

In Step S206, the second mobile terminal transmits the operation instruction to the first mobile terminal for the first mobile terminal to execute the wireless communication function instructed by the operation instruction.

Alternatively, the wireless communication function may include at least one of the following: a text message function, a multimedia message function and a call function.

By means of the description of the above implementation manners, those skilled in the art may clearly understand that the methods of the above embodiments may be implemented by means of software and a necessary general hardware platform, and certainly may also be implemented by hardware. Based on such an understanding, the technical solution of the embodiments of the present disclosure or the part contributing to the related art may be essentially embodied in a form of a software product. The computer software product is stored on a storage medium (such as a ROM/RAM, a magnetic disk, an optical disk), and includes a number of instructions for enabling a terminal device (which may be a mobile phone, a computer, a server, or a network device) to execute the methods of the embodiments of the present disclosure.

An embodiment of the present disclosure further provides a computer-readable storage medium storing a computer-executable instruction, which, when being executed, implements the above remote control method.

This embodiment further provides a remote control apparatus, which may be applied to a first mobile terminal. The apparatus is configured to implement the above embodiment and alternative implementations, and details which have been described will not be repeated. As used below, the term "module" refers to a combination of software and/or hardware for implementing a predetermined function. Although the apparatus described in the following embodiment may be implemented in software, the implementation by hardware or by a combination of the software and the hardware is also possible and conceived.

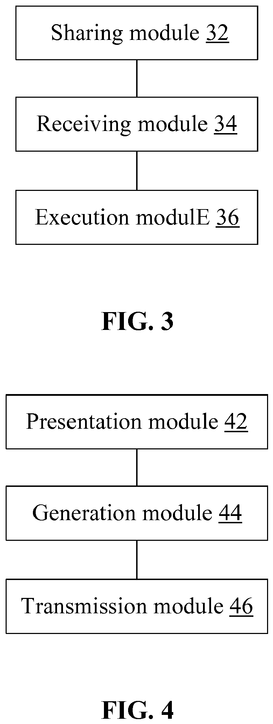

FIG. 3 is a block diagram showing a structure of a remote control apparatus according to an embodiment of the present disclosure. As shown in FIG. 3, the apparatus includes a sharing module 32, a receiving module 34 and an execution module 36. The sharing module 32 is configured to share a first user interface of the first mobile terminal to a second mobile terminal to present a second user interface on the second mobile terminal. The second user interface includes a content of the first user interface. The receiving module 34 is coupled to the sharing module 32 and is configured to receive an operation instruction of the second mobile terminal. The second user interface is generated according to an operation on the second user interface, and the operation instruction is used to instruct the first mobile terminal to execute a wireless communication function. The execution module 36 is coupled to the receiving module 34 and configured to execute the wireless communication function instructed by the operation instruction.

Alternatively, the wireless communication function may include, but is not limited to, at least one of the following: a text message function, a multimedia message function and a call function.

Alternatively, the sharing module 32 may be configured to monitor an event. The event includes at least one of the following: receiving a communication request from the second mobile terminal, receiving a text message or multimedia message, and receiving a call incoming request. Upon monitoring the event, the sharing module 32 is configured to push the first user interface to the second mobile terminal to present the second user interface on the second mobile terminal.

Alternatively, in a case where the communication function includes the text message function or multimedia message function, the execution module 36 may be configured to obtain an information content and a destination address carried in the operation instruction; generate a text message or multimedia message according to the information content and the destination address; and transmit the generated text message or multimedia message.

Alternatively, in a case where the communication function includes a calling function, the execution module 36 may be configured to obtain a called number of a called party carried in the operation instruction; and dial a call out according to the called number, and establish a call with the called party. The first mobile terminal receives a call audio or call video acquired by the second mobile terminal, and transmits a call audio or call video received from the called party to the second mobile terminal, so as to implement an audio call or video call between the second mobile terminal and the called party.

Alternatively, in a case where the communication function includes a called function, the execution module 36 may be configured to accept or reject a call request of a calling party according to the operation instruction. When the first mobile terminal accepts the call request of the calling party, the first mobile terminal receives a call audio or call video acquired by the second mobile terminal and transmits a call audio or call video received from the calling party to the second mobile terminal, so as to implement an audio call or video call between the second mobile terminal and the calling party.

Alternatively, the first mobile terminal and the second mobile terminal may communicate over a wireless interface.

Alternatively, the apparatus may further include an authentication-pairing module, which is coupled to the sharing module 32 and configured to perform authentication and pairing on the first mobile terminal and the second mobile terminal and establish a wireless connection between the first mobile terminal and the second mobile terminal through a wireless interface. Data is transmitted between the first mobile terminal and the second mobile terminal via the wireless connection.

Alternatively, the apparatus may further include an unpairing request receiving module configured to receive an unpairing request, and a deleting module coupled to the unpairing request and configured to delete, by the first mobile terminal, an authentication-pairing relationship between the first mobile terminal and the second mobile terminal according to the unpairing request.

Alternatively, the apparatus may further include a predetermined data receiving module and a storing module. The predetermined data receiving module is configured to receive predetermined data in the second mobile terminal through the wireless interface. The predetermined data includes, but is not limited to, at least one of the following: text data, picture data, audio data, video data, and a system configuration file of the second mobile terminal. The storing module is coupled to the predetermined data receiving module and configured to store the predetermined data to a non-volatile memory of the first mobile terminal.

Alternatively, the wireless interface may include, but is not limited to, one of the following: a near field communication module, a Bluetooth module, a WIFI module, and a mobile communication module.

This embodiment further provides a remote control apparatus, which may be applied to the second mobile terminal. The apparatus is configured to implement the above embodiment and alternative implementations, and details which have been described will not be repeated. As used below, the term "module" refers to a combination of software and/or hardware for implementing a predetermined function. Although the apparatus described in the following embodiment may be implemented in software, the implementation of hardware or a combination of the software and the hardware is also possible and conceived.

FIG. 4 is a block diagram showing a structure of another remote control apparatus according to an embodiment of the present disclosure. As shown in FIG. 4, the apparatus includes a presentation module 42, a generation module 44, and a transmission module 46. The presentation module 42 is configured to present a second user interface. The second user interface includes a first user interface, and the first user interface is shared by a first mobile terminal. The generation module 44 is coupled to the presentation module 42 and configured to generate an operation instruction according to an operation of a user on the second user interface. The operation instruction is used to instruct the first mobile terminal to execute a wireless communication function. The transmission module 46 is coupled to the generation module 44 and configured to transmit the operation instruction to the first mobile terminal for the first mobile terminal to execute the wireless communication function instructed by the operation instruction.

Alternatively, the wireless communication function may include, but is not limited to, at least one of the following: a text message function, a multimedia message function and a call function.

It is to be noted that the above modules may be implemented by software or hardware, and the latter may be implemented by, but not limited to, the following manners: the above modules are all located in the same processor; or, the above modules are respectively located in multiple processors.

An embodiment of the present disclosure further provides a mobile terminal, including the above remote control apparatus applied to the first mobile terminal.

An embodiment of the present disclosure further provides a mobile terminal, including the above remote control apparatus applied to the second mobile terminal.

An embodiment of the present disclosure further provides software, which is configured to execute the technical solution described in the above embodiments and alternative implementations.

An embodiment of the present disclosure further provides a storage medium. In this embodiment, the above storage medium may be configured to store program codes for performing the following steps.

In step S102, a first mobile terminal shares a first user interface of the first mobile terminal to a second mobile terminal to present a second user interface on the second mobile terminal, where the second user interface includes a content of the first user interface.

In step S104, the first mobile terminal receives an operation instruction of the second mobile terminal, where the operation instruction is generated according to an operation on the second user interface and used to instruct the first mobile terminal to execute a wireless communication function.

In step S106, the first mobile terminal executes a wireless communication function instructed by the operation instruction.

An embodiment of the present disclosure further provides a storage medium. In this embodiment, the above storage medium may be configured to store program codes for performing the following steps.

In step S202, a second mobile terminal presents a second user interface, where the second user interface includes a first user interface, and the first user interface is shared by a first mobile terminal.

In step S204, the second mobile terminal generates an operation instruction according to an operation of a user on the second user interface, where the operation instruction is used to instruct the first mobile terminal to execute a wireless communication function.

In step S206, the second mobile terminal transmits the operation instruction to the first mobile terminal for the first mobile terminal to execute the wireless communication function instructed by the operation instruction.

Alternatively, in this embodiment, the above storage medium may include, but not limited to, a U disk, a read-only memory (ROM), a random access memory (RAM), a removable hard disk, a magnetic disk or an optical disk, and other media capable of storing program codes.

Alternatively, for a specific example in this embodiment, reference may be made to examples described in the above embodiments and alternative embodiments, and details will not be repeated here in this embodiment.

In order to make the description of the embodiments of the present disclosure be more comprehensible, they will be described and illustrated below in conjunction with the alternative embodiments.

In the alternative embodiments of the present disclosure, by means of the remote control method, various operations such as making a call, transmitting a text message, making online payment, and the like of a mobile phone are run on a remote secure mobile phone (equivalent to the above first mobile terminal), and important operations are isolated from the current mobile phone (equivalent to the above second mobile terminal). In this way, even if the background of the current mobile phone has a Trojan program, a password and other information of the user may not be obtained by intercepting a system state. In addition, data stored by the mobile phone itself is not lost with the loss of the control-side mobile phone (equivalent to the above second mobile terminal); data of the control-side mobile phone may be stored in the remote secure mobile phone. Moreover, even if the control-side mobile phone is lost, the data stored on the secure mobile phone still exists, and there is also no need to worry about an impact on the security of their important information when the control-side mobile phone is cracked.

The secure mobile phone in the alternative embodiment of the present disclosure supports Bluetooth (or NFC), WIFI and a mobile network (such as the fourth generation mobile communication system (4G)/the third generation mobile communication system (3G)), may have no display screen, and may also have no speech input. The secure mobile phone may access the network via the Bluetooth, the WIFI and the mobile network, may dial the call out and transmit and receive the text message. Because the secure mobile phone has no display screen and other similar hardware, the appearance of the secure mobile phone may be masqueraded as other forms other than the handset.

An alternative embodiment of the present disclosure may further include a controlling terminal running on a common mobile phone and a controlled terminal running on a secure mobile phone of an alternative embodiment of the present invention. The controlled terminal may be configured to transmit a screen picture on the secure mobile phone in the alternative embodiment of the present disclosure to the controlling terminal, and receive and process data and an instruction transmitted from the controlling terminal, and may perform authentication on the data and the instruction from the controlling terminal to prevent illegal data and instructions from being processed. The controlling terminal may be configured to transmit data and an instruction of the user, and display the screen picture from the controlled terminal mobile phone.

An alternative embodiment of the present disclosure further provides a server, which is configured to interconnect an internal network with an external network. The server may connect two devices in different network segments.

An alternative embodiment of the present disclosure further provides a method for securing user data. A user may turn on the secure mobile phone of the alternative embodiment of the present disclosure before using it, then install the controlling terminal on another common mobile phone, and then operation according to the following steps.

In a first step, when the user uses this system for the first time, the secure mobile phone and the mobile phone in which the controlling terminal is installed are paired, which may be completed by using Bluetooth or NFC.

In a second step, after the pairing is completed, an interface picture of the secure mobile phone may be seen on the mobile phone in which the controlling terminal is installed. At this time, various operations including making a call and the like on the secure mobile phone may be performed on the controlling terminal. The specific executions of these operations are completed on the remote secure mobile phone by means of remote control, which is equivalent to map a screen of the secure mobile phone to the controlling terminal, and then an actual operation may be completed on the mapped screen.

In a third step, when the user is in a WIFI or mobile network, whether to automatically copy photos and other information of the user on the mobile phone where the controlling terminal is installed onto the secure mobile phone depends on the user's settings.

In a fourth step, the user may remotely control the secure mobile phone in various network environments. When the secure mobile phone and the mobile phone where the controlling terminal is installed are in the same network environment, for example, WIFI, the secure mobile phone and the mobile phone where the controlling terminal is installed may be directly connected. If one of the secure mobile phone and the mobile phone where the controlling terminal is installed is in a public network, and the other one is in an internal network, then the secure mobile phone and the mobile phone where the controlling terminal is installed may be connected over a server of the public network. Moreover, the connection of the secure mobile phone and the mobile phone where the controlling terminal is installed may be freely switched in different networks.

Hereto, all operations and data of the user may be run on the secure mobile phone, the mobile phone where the controlling terminal is installed merely provides a carrier. In this way, malicious programs that run on the mobile phone where the controlling terminal is installed and intercept background information cannot steal important data of the user by intercepting background data (such as a text message hijacking code, and the like).

In addition, when the user's mobile phone where the controlling terminal is installed is lost, it is just need to use another mobile phone to transmit a command to the secure mobile phone by means of a text message, that is, to close the previous pairing, so as to ensure that the data stored on the secure mobile phone is not lost. If there is a need for turning on remote control, it is necessary to perform pairing again by using Bluetooth or NFC.

Meanwhile, the method for securing user data mentioned in the alternative embodiment of the present disclosure may also be applied to a screenless or small-screen MiFi (Mobile WIFI, that is, a portable hotspot) product for overcoming a problem of relatively low security due to a possible snooping of a protocol packet when an operation is performed with a Hypertext Transfer Protocol (Http for short) request in the related art, and allowing a user to operate the MiFi quickly and easily. Firstly, a controlled terminal running on the MiFi is started to wait for a controlling terminal running on a common mobile phone to access. When the controlling terminal initiates an access request, identity authentication is performed firstly, and after the authentication succeeds, interface information and resolution information transmitted by the controlled terminal running on the MiFi are received. Next, the controlling terminal configures a picture transmitted by the current controlled terminal running on the MiFi according to the resolution information, and displays the interface picture of the MiFi at a suitable resolution on the common mobile phone. When the user operates, the controlling terminal transmits control information to the controlled terminal of the MiFi to complete an operation on the MiFi device. Specific steps may be performed as follows.

In a first step, when the user uses this system for the first time, a controlling terminal is installed in the common mobile phone firstly, and then identity authentication is performed according to an initial authentication password in a manual of the MiFi, or a password modification operation may be performed.

In a second step, after the user logs into the MiFi through the controlling terminal, the user may perform a service operation according to the interface picture of the MiFi displayed on the controlling terminal.

In a third step, after the operation is completed, the user may perform a disconnection operation to end the communication between the controlling terminal and the controlled terminal.

Alternative embodiments of the present disclosure will be further described and illustrated below through examples.

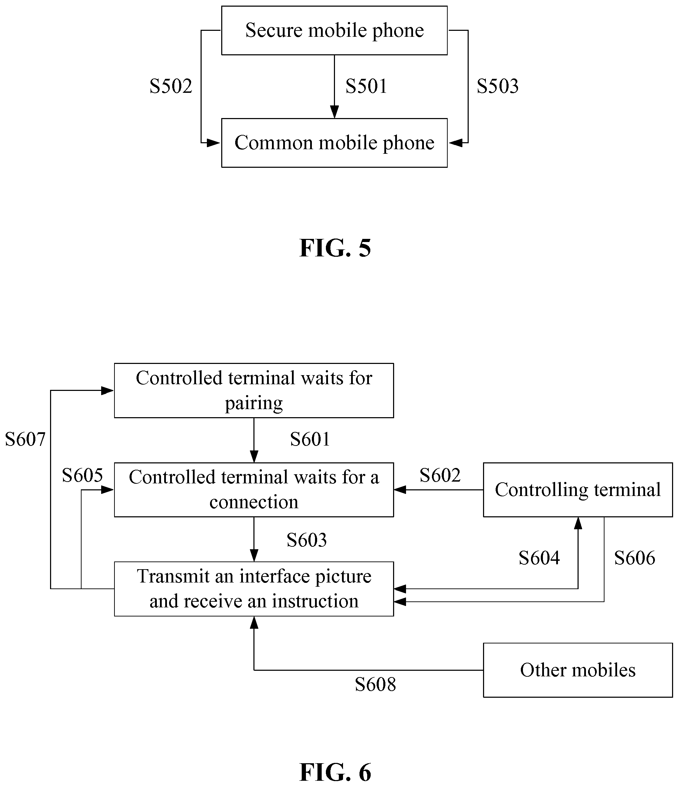

An alternative embodiment of the present disclosure provides a method for initializing a secure mobile phone and a control-side mobile phone. With reference to FIG. 5, FIG. 5 is a schematic flowchart of a method according to this embodiment. The method includes the following steps.

In step S501, the secure mobile phone sets up a communication with a common mobile phone in a wireless communication manner to transmit a program of the controlling terminal to the common mobile phone. The wireless communication manner in this embodiment may be wireless communication manners such as Bluetooth or NFC.

In step S502, the common mobile phone encrypts critical information (such as an IMEI number, a username, a password and other unique information for authentication) of a current mobile phone and transmits the encrypted information through the program of the controlling terminal by using a communication link established in the step S501, and configures network parameters (such as a WIFI parameter, and the like) of the secure mobile phone. In the meanwhile, the user writes an instruction for closing pairing on the controlling terminal of the common mobile phone and transmits the instruction to a controlled terminal of the secure handset for closing the previous pairing.

In step S503, after the initial pairing is completed, the controlled terminal of the secure mobile phone transmits a picture to the controlling terminal of the common mobile phone and starts to receive the instruction from the controlling terminal. At this time, the secure mobile phone may be remotely controlled by the program of the controlling terminal on the common mobile phone.

An alternative embodiment of the present disclosure provides a method for securing user data and operation information. With reference to FIG. 6, the method includes the following steps.

In step S601, a controlled terminal of a secure mobile phone starts to read information and determines whether it has been paired with a controlling terminal or not according to the read information. If not be paired, the controlled terminal of the secure mobile phone stays in a state of waiting for pairing. If paired, the controlled terminal of the secure mobile phone starts a connection server at a background to monitor a connection of the controlling terminal.

In step S602, the controlling terminal running on a common mobile phone initiates a connection request, transmits previously configured critical information such as a username, a password and an International Mobile Equipment Identity (IMEI) number of the common mobile phone to the controlled terminal of the secure mobile phone. The controlled terminal of the secure mobile phone performs authentication analysis on the received information, if the authentication fails, directly transmits an authentication failure message to the controlling terminal, and otherwise, performs Step S603.

In step S603, a current picture is transmitted onto the controlling terminal, and an instruction receiving service is started to wait for an instruction from the controlling terminal.

In step S604, the user implements an operation on the secure mobile phone through an interface picture of the secure mobile phone displayed on the controlling terminal. The interface picture of the secure mobile phone displayed on the controlling terminal is the same as an interface of the common mobile phone, and a touch input (such as click, slide, and the like) of the user may be implemented on this picture and the basic control may be realized. When the user needs to make a call with the secure mobile phone, the user just needs to dial directly on the interface picture of the secure mobile phone displayed on the controlling terminal; and then, the controlling terminal may transmit a speech input inputted to the user via the common mobile phone to the secure mobile phone. Meanwhile, the controlled terminal of the secure mobile phone may transmit speech data of a called party to the controlling terminal, and then the user may hear the speech through the common mobile phone. However, in fact, the user makes the call through the secure mobile phone. Similarly, when the user uses online payment and other functions, he or she may operate on the interface picture of the secure mobile phone displayed on the controlling terminal, which is equivalent to a case where the user directly operates the secure mobile phone to complete this function.

In step S606, when the user does not need to operate the secure mobile phone, he/she just needs to exit the controlling terminal and the controlling terminal transmits an "exit command" when exiting. After receiving the "exit command", the controlled terminal closes the outputting of the picture of the controlled terminal and the receiving of the command, and reenters a state of waiting for a connection as in step S605.

Isolation is achieved by means of such an operation. Even if there are malicious programs such as a Trojan program on the common mobile phone of the user (such malicious programs usually monitor various states of the system of the current mobile phone at background and intercept data of application programs by other means, for example, intercept a text message and the like), these malicious programs cannot obtain valuable information from information transmitted by the controlling terminal to the controlled terminal such as a touch position information.

To better illustrate the effect of this embodiment and further explain it in combination with a specific usage scenario, a scenario that a user uses a mobile phone to perform online payment will be illustrated as an example by employing the steps of FIG. 6 as well.

Firstly, a user runs a controlling terminal on a common mobile phone to initiate a connection request to a secure mobile phone, as in step S602. After the authentication is passed at the secure mobile phone, the secure mobile phone sets up a connection with the controlling terminal, starts to transmit a picture to the controlling terminal and waits for an instruction from the controlling terminal, as in Step S603. At this time, the user may operate the secure mobile phone through the controlling terminal as operating directly on a screen of the secure mobile phone.

Secondly, the user logs in a network payment tool such as Alipay on an interface of the secure mobile phone displayed on the controlling terminal, and the controlling terminal transmits specific operation parameters indicative of the user's clicking on the current mobile phone to the secure mobile phone. After the secure mobile phone receives operation parameters from the controlling terminal, the operation parameters are analyzed into a simulated user input operation, and then the secure mobile phone performs this input operation and transmits the current picture to the controlling terminal. At this time, the user may see an interface picture of completing the previous input operation, which is similar to a touch operation of the common mobile phone. Similarly, the payment amount is entered, and then an online payment transaction is completed. Such a process is as in step S604. At this time, functions similar to login payment of the online payment tool such as Alipay are performed on the secure mobile phone. The controlling terminal merely transmits data, which is input by the user, related to operations of clicking the screen and sliding the screen to the secure mobile phone. Even if background information stealing software such as a Trojan program runs on the controlling terminal, the background information stealing software intercepts data related to some click operations at most, and does not know what the corresponding system specifically performs in response to these operations. In addition to this, bank account and other information may be safety checked.

Finally, when the user finishes the payment, the user does not need to operate the secure mobile phone any more, and just needs to exit the controlling terminal. Meanwhile, the controlling terminal transmits an "exit instruction" when exiting, as in step S606. After the controlled terminal receives the "exit instruction", the controlled terminal closes the outputting of a picture of the controlled terminal and the receiving of the instruction, and reenters a state of waiting for a connection, as in step S605.

By utilizing the method in this embodiment, the user may make a secure payment.

An alternative embodiment of the present disclosure provides a processing method when a common mobile phone of a user is lost. With reference to FIG. 6, the connection between the controlled terminal and the controlling terminal is the same as that in the previous embodiments, except that when a control-side mobile phone of the user is lost, the user only needs to find a mobile phone immediately to transmit a text message including a pairing closing instruction pre-set by the user, as shown in step S608. At this time, the controlled terminal will close the current pairing, and close the outputting of the interface picture of the controlled terminal and the receiving of the instruction, and the secure mobile phone reenters a state of waiting for pairing, as shown in step S607.

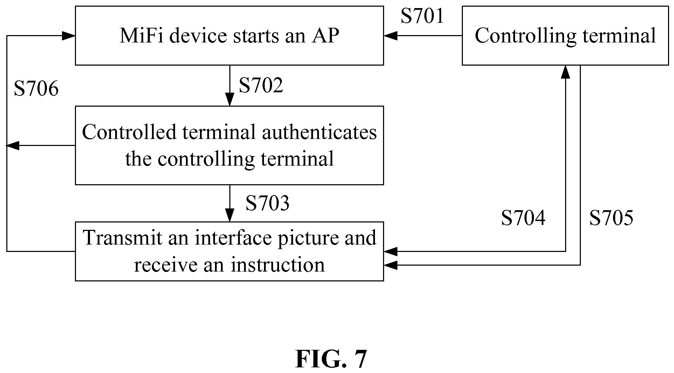

An alternative embodiment of the present disclosure further provides a method for controlling a MiFi. As shown in FIG. 7, the method includes the following steps.

In step S701, after a MiFi device is started, a wireless access point (AP) is turned on to provide a hotspot. If the MiFi device is started up for the first time, the wireless access point is turned on with default parameters. At this time, an access device such as a mobile phone and the like accesses the hotspot provided by the MiFi via WIFI. When the user operates the MiFi through a controlling terminal on the mobile phone, such as modifying a parameter of the AP of the MiFi and the like, the controlling terminal on the mobile phone is started to initiate a connection request to a controlled terminal in the MiFi device.

In step S702, after the controlled terminal of the MiFi device receives the connection request transmitted by the controlling terminal, the controlled terminal of the MiFi device needs to authenticate the controlling terminal. When the controlled terminal of the MiFi device runs with default authentication parameters (such as a username and a password), the user only needs to log in the MiFi device through the controlling terminal on the mobile phone according to the default username and the default password in the manual of the MiFi, and the user may modify these authentication parameters through the controlling terminal.

In step S703, after the controlling terminal of the mobile phone is authenticated by the controlled terminal on the MiFi device, the controlled terminal encrypts interface information and resolution information of the MiFi device and transmits the encrypted interface information and resolution information to the controlling terminal. If the authentication fails, the controlled terminal returns an authentication failure message to the controlling terminal, and enters a state of waiting for the controlling terminal to access, as in step S706.

In Step S704, the controlled terminal of the MiFi device transmits an interface picture of the MiFi device to the controlling terminal. Meanwhile, the controlling terminal adapts the interface picture transmitted by the controlled terminal of the MiFi according to the received resolution information transmitted by the controlled terminal of the MiFi, and then displays the interface picture of the MiFi with a suitable resolution on the common mobile phone. Meanwhile, the controlled terminal of the MiFi device is ready to receive instructions from the controlling terminal, and these control instructions are transmitted between the controlling terminal and the controlled terminal in a certain encryption manner. At this time, the user may operate the MiFi device on the interface picture of the controlling terminal, for example, modify a parameter of the AP, which is equivalent to a case where the user directly operates on the interface of the MiFi device even though the MiFi device does not have an actual physical screen.

In step S705, after the user completes an operation of a business through the controlling terminal of the mobile phone, the controlling terminal transmits an exit instruction to the controlled terminal. At this time, the controlling terminal exits and the controlled terminal enters a state of waiting for access, as in step S706.

In conclusion, with the above embodiments and the alternative embodiments of the present disclosure, it is possible to effectively prevent information of the mobile phone from being stolen, for example, by a Trojan program in background, because the actually running mobile phone is the remote mobile phone, the Trojan program cannot intercept the important information of the user. Meanwhile, these embodiments may also be applied to screenless or small-screen MiFi products, allowing the user to operate the MiFi quickly and easily.

Those ordinarily skilled in the art may understand that all or a part of steps of the above embodiments may be implemented by a computer program. The computer program may be stored in a computer-readable storage medium and performed on a corresponding hardware platform (for example, a system, a device, an apparatus, a means, a processor, and the like), and when being executed, the computer program performs one or a combination of the steps of method embodiments.

Alternatively, all or a part of the steps in the above embodiments may also be implemented by an integrated circuit, these steps may be separately made into integrated circuit modules, or multiple modules or steps therein may be made into a single integrated circuit module.

Apparatuses/functional modules/functional units in the above embodiments may be implemented by general-purpose computing apparatuses, which may be centralized on a single computing apparatus or distributed on a network formed by multiple computing apparatuses.

When being implemented in a software function module and sold or used as an independent product, the apparatuses/functional modules/functional units in the above embodiments may be stored in a computer-readable storage medium. The above-mentioned computer-readable storage medium may be a read-only memory, a magnetic disk, an optical disk, or the like.

Those ordinarily skilled in the art should understand that modification or equivalent substitution can be made on the technical solution in this disclosure without departing from the spirit and scope of the technical solution in this disclosure. The protective scope of this disclosure is subject to the scope defined by claims.

### INDUSTRIAL APPLICABILITY

A first user interface of a first mobile terminal is shared to a second mobile terminal by the first mobile terminal to present a second user interface on the second mobile terminal, where the second user interface includes a content of the first user interface; the first mobile terminal receives an operation instruction of the second mobile terminal, where the operation instruction is generated according to an operation on the second user interface and is used to instruct the first mobile terminal to execute a wireless communication function; and the first mobile terminal executes the wireless communication function instructed by the operation instruction. Accordingly, the embodiments of the present disclosure solve the problem of low security of data in the mobile terminal and improve the security of the data in the mobile terminal.

## Claims

1. A remote control method, comprising:
sharing a first user interface of a first mobile terminal to a second mobile terminal by the first mobile terminal to present a second user interface on the second mobile terminal, wherein the second user interface comprises a content of the first user interface;
receiving an operation instruction of the second mobile terminal by the first mobile terminal, wherein the operation instruction is generated according to an operation on the second user interface, and the operation instruction is configured to instruct the first mobile terminal to execute a wireless communication function; and
executing, by the first mobile terminal, the wireless communication function instructed by the operation instruction.

2. The method according to claim 1, wherein the wireless communication function comprises at least one of the following: a text message function, a multimedia message function and a call function.

3. The method according to claim 1, wherein the sharing a first user interface of a first mobile terminal to a second mobile terminal by the first mobile terminal comprises:
monitoring an event by the first mobile terminal, wherein the event comprises at least one of the following: receiving a communication request of the second mobile terminal, receiving a text message or multimedia message, and receiving a call incoming request; and
upon monitoring the event, pushing the first user interface to the second mobile terminal by the first mobile terminal to present the second user interface on the second mobile terminal.

4. The method according to claim 1, wherein the wireless communication function comprises a text message function or a multimedia message function,
wherein the executing, by the first mobile terminal, the wireless communication function instructed by the operation instruction comprises:
obtaining, by the first mobile terminal, information content and a destination address carried in the operation instruction;
generating a text message or a multimedia message by the first mobile terminal according to the information content and the destination address; and
transmitting the generated text message or multimedia message by the first mobile terminal.

5. The method according to claim 1, wherein the wireless communication function comprises a calling function,
wherein the executing, by the mobile terminal, the wireless communication function instructed by the operation instruction comprises:
obtaining, by the first mobile terminal, a called number of a called party carried in the operation instruction; and
dialing the called number and establishing a call with the called party by the first mobile terminal, wherein the first mobile terminal receives a call audio or call video acquired by the second mobile terminal and transmits a call audio or call video received from the called party to the second mobile terminal so as to implement an audio call or video call between the second mobile terminal and the called party.

6. The method according to claim 1, wherein the wireless communication function comprises a called function,
wherein the executing, by the first mobile terminal, the wireless communication function instructed by the operation instruction comprises:
accepting or rejecting a call request from a calling party by the first mobile terminal according to the operation instruction, wherein in a case where the first mobile terminal accepts the call request from the calling party, the first mobile terminal receives a call audio or call video acquired by the second mobile terminal and transmits a call audio or call video received from the calling party to the second mobile terminal so as to implement an audio call or video call between the second mobile terminal and the calling party.

7. The method according to claims 1 to 6, wherein the first mobile terminal and the second mobile terminal communicate with each other over a wireless interface.

8. The method according to claim 7, before the first mobile terminal sharing the first user interface to the second mobile terminal, the method further comprising: performing authentication and pairing on the first mobile terminal and the second mobile terminal, and establishing a wireless connection between the first mobile terminal and the second mobile terminal through the wireless interface.

9. The method according to claim 8, after performing authentication and pairing on the first mobile terminal and the second mobile terminal, the method further comprising:
receiving an unpairing request by the first mobile terminal; and
deleting an authentication-pairing relationship between the first mobile terminal and the second mobile terminal by the first mobile terminal according to the unpairing request.

10. The method according to claim 7, after the first mobile terminal sharing the first user interface to the second mobile terminal, the method further comprising:
receiving, the first mobile terminal, predetermined data of the second mobile terminal through the wireless interface, wherein the predetermined data comprises at least one of the following: text data, picture data, audio data, video data, and a system configuration file of the second mobile terminal; and
storing the predetermined data in a non-volatile memory of the first mobile terminal by the first mobile terminal.

11. The method according to claim 7, wherein the wireless interface comprises one of the following: a near field communication module, a Bluetooth module, a WIFI module and a mobile communication module.

12. A remote control method, comprising:
presenting a second user interface by a second mobile terminal, wherein the second user interface comprises a first user interface, and the first user interface is shared by a first mobile terminal;
generating an operation instruction by the second mobile terminal according to an operation of a user on the second user interface, wherein the operation instruction is configured to instruct the first mobile terminal to execute a wireless communication function; and
transmitting, by the second mobile terminal, the operation instruction to the first mobile terminal for the first mobile terminal to execute the wireless communication function instructed by the operation instruction.

13. The method according to claim 12, wherein the wireless communication function comprises at least one of the following: a text message function, a multimedia message function and a call function.

14. A remote control apparatus, applied to a first mobile terminal, comprising:
a sharing module configured to share a first user interface of the first mobile terminal to a second mobile terminal to present a second user interface on the second mobile terminal, wherein the second user interface comprises a content of the first user interface;
a receiving module configured to receive an operation instruction of the second mobile terminal, wherein the operation instruction is generated according to an operation on the second user interface and is configured to instruct the first mobile terminal to execute a wireless communication function; and
an execution module configured to execute the wireless communication function instructed by the operation instruction.

15. A remote control apparatus, applied to a second mobile terminal, comprising:
a presentation module configured to present a second user interface, wherein the second user interface comprises a first user interface, and the first user interface is shared by a first mobile terminal;
a generation module configured to generate an operation instruction according to an operation of a user on the second user interface, wherein the operation instruction is configured to instruct the first mobile terminal to execute a wireless communication function; and
a transmission module configured to transmit the operation instruction to the first mobile terminal for the first mobile terminal to execute the wireless communication function instructed by the operation instruction.

16. A mobile terminal, comprising the remote control apparatus according to claim 14.

17. A mobile terminal, comprising the remote control apparatus according to claim 15.
